# EUROPEAN PATENT APPLICATION

(11) **EP 4 586 379 A1**
(43) Date of publication of application: **16.07.2025**
(21) Application number: 24215799.8
(22) Date of filing: 27.11.2024
(51) Int. Cl.: H01M 50/213, H01M 50/244, H01M 50/262, H01M 50/289

(54) **BATTERY MODULE**

(30) Priority: 10.01.2024 KR 20240004272
(71) Applicant: SAMSUNG SDI CO., LTD., Yongin-si, Gyeonggi-do 17084 (KR)
(72) Inventor: Jeong, Daein, Yongin-si, Gyeonggi-do 17084 (KR); Kim, Junseop, Yongin-si, Gyeonggi-do 17084 (KR); Moon, Daeyon, Yongin-si, Gyeonggi-do 17084 (KR)
(74) Representative: Gulde & Partner

(57) **Abstract**

A battery module (10) including a holder (25) configured to fix positions of battery cells (20) therein, the holder (25) including an upper holder (30) accommodating and fixing top portions of the battery cells (20), and a lower holder (40) accommodating and fixing bottom portions of the battery cells (20), a frame (15) coupled to an outer side of the holder (25), the frame (15) being configured to protect the battery cells (20), and a curing structure (50) coupling the upper holder (30) and the lower holder (40) to each other, the curing structure (50) including a cured adhesive.

## Description

### 1. Field

One or more embodiments relate to a battery module, and more particularly, to a coupling structure of a battery holder to fix a battery cell.

### 2. Description of the Related Art

A secondary battery can be charged and discharged, unlike a primary battery that cannot be recharged. Low-capacity secondary batteries are used in small portable electronic devices such as smartphones, feature phones, laptop computers, digital cameras, and camcorders, and high-capacity secondary batteries are used as motor-driving power sources, power-storing batteries, etc., for hybrid vehicles, electric vehicles, etc. Such a secondary battery may include an electrode assembly having a cathode and an anode, a case accommodating the electrode assembly, an electrode terminal connected to the electrode assembly, etc.

Generally, a plurality of secondary batteries may be connected to each other to define a battery module, and a plurality of battery modules may be connected to each other to define a battery pack. The battery pack may be used to store energy of an energy storage system (ESS) or an electric vehicle (EV). The EV may include a hybrid electric vehicle (HEV), a plugin hybrid electric vehicle (PHEV), a battery electric vehicle (BEV), etc.

The battery pack may be manufactured in a form in which a plurality of secondary batteries (i.e., battery cells) are electrically connected to each other and accommodated in a case. A position of each of the battery cells in the case may be fixed by a battery holder. The battery cell may include, e.g., a circular cell. The battery holder may include an upper holder supporting a top portion of the battery cell and a lower holder supporting a bottom portion of the battery cell.

Generally, the upper holder and the lower holder may be coupled to each other by a bolt. In this case, a nut may be inserted into the lower holder. The nut may be coupled to the lower holder by insert-injection or indentation after injection. However, a structure in which the nut is installed by insert-injection or indentation after injection may require a high manufacturing cost. Also, if the upper holder and the lower holder are coupled to each other by laser welding, a weldable resin needs to be used, thereby increasing a material cost.

The above-described information disclosed in the technology section that serves as the background of the present disclosure is only for improving the understanding of the background of the present disclosure, and thus may include information that does not constitute related art.

### SUMMARY

One or more embodiments include a battery module with an improved coupling structure of an upper holder and a lower holder of the battery module, thereby reducing a manufacturing cost and enhancing a coupling rigidity.

According to one or more embodiments, a battery module includes a holder fixing positions of a plurality of battery cells, a battery module including a frame coupled to an outer side of the holder to protect the plurality of battery cells, an upper holder accommodating and fixing a top portion of the plurality of battery cells, and a lower holder accommodating and fixing a bottom portion of the plurality of battery cells and being coupled to the upper holder, in which the upper holder and the lower holder are coupled to each other by a curing structure formed by curing of the adhesive.

The adhesive may be cured with a boundary portion between the lower holder and the upper holder being in a submerged state.

The cured adhesive may laterally overlap a boundary portion between the lower holder and the upper holder.

The adhesive may be coupled to the frame.

The upper holder and the lower holder may each include a hook coupling portion, and the adhesive may be filled in an empty space of the hook coupling portion.

The hook coupling portion may include a catching protrusion formed on the lower holder and a catching ring formed on the upper holder and coupled to the catching protrusion.

The adhesive may be any one of a silicon-containing adhesive and a urethane-containing adhesive.

The adhesive may be cured by any one of natural curing, thermal curing, and ultraviolet curing to form the curing structure.

The frame and the lower holder may be coupled to each other by a screw.

The lower holder may include a spill prevention protrusion that prevents the adhesive in a liquid state from spilling down if the adhesive is injected.

The curing structure may include a loop.

The curing structure may be formed along a circumference of the lower holder.

According to one or more embodiments, a method of manufacturing a battery module includes forming a holder configured to fix positions of battery cells therein, the holder including an upper holder accommodating and fixing top portions of the battery cells, and a lower holder accommodating and fixing bottom portions of the battery cells, forming a frame coupled to an outer side of the holder, the frame being configured to protect the battery cells, depositing an adhesive between the holder and the frame, and curing the adhesive to form a curing structure coupling the upper holder and the lower holder to each other.

The curing of the adhesive may include any one of natural curing, thermal curing, and ultraviolet curing to form the curing structure.

The adhesive may be cured with a boundary portion between the lower holder and the upper holder being in a submerged state.

The method may further comprise: coupling a bottom portion of a plurality of battery cells to the lower holder, assembling the frame to the lower holder, injecting an adhesive in the liquid state along an upper edge circumference of the lower holder, coupling the upper holder to the lower holder, and curing the adhesive.

The frame may be fixed to the lower holder by a screw.

### BRIEF DESCRIPTION OF THE DRAWINGS

Features will become apparent to those of skill in the art by describing in detail exemplary embodiments with reference to the attached drawings, in which:
FIG. 1 shows an exterior perspective view of a battery module according to embodiments of the present disclosure;
FIG. 2 shows main components of FIG. 1 separated from each other;
FIG. 3 is a cross-sectional view along line III - III of FIG. 1;
FIG. 4 shows a cubic shape of a curing structure according to the present disclosure; and
FIG. 5 shows a test material for comparing a structure rigidity (eigen frequency) of a battery module according to the present disclosure with a structure rigidity of a battery module according to a related art structure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

If used herein, "comprise," "include" and/or "comprising," "including" specify mentioned shapes, numbers, steps, operations, members, components, and/or presence of these groups, and do not exclude the presence or addition of one or more different shapes, numbers, operations, members, components, and /or groups. If embodiments of the present disclosure are described, "can" or "may" may include "one or more embodiments of the present disclosure".

A statement that two comparison targets are 'the same' as each other may mean that they are 'substantially the same' as each other. Thus, a case where they are 'substantially the same' as each other may include a case where they have a deviation regarded as a low level, e.g., a deviation of 5 % or less. If a uniform parameter is uniform in a predetermined area, it may mean that it is uniform from an average point of view.

Although first, second, etc., may be used to describe various components, these components are not limited by these terms. These terms are only used to distinguish one component from other components, and unless specifically stated to the contrary, a first component may be a second component.

Throughout the specification, unless specially stated to the contrary, each component may be singular or plural.

If a component is arranged on "a top portion (or a bottom portion)" of another component or "on (or under)" the other component, it may mean not only a case where the component is arranged adjacent to a top surface (or a bottom surface) of the other component, but also a case where another component may be interposed between the other component and the component arranged on (or under) the other component.

If a component is described as being "connected" or "coupled" to another component, it should be understood that the components may be directly connected or connectable to each other, or another component may be "interposed" between the components. If a portion is electrically coupled to another portion, this may include not only a case where they are directly electrically connected to each other, but also a case where they are connected with another element therebetween.

Throughout the specification, "A and/or B" may mean A, B, or A and B unless specially stated otherwise. That is, "and/or" may include all or any combination of a plurality of items listed. "C to D" may mean at least C but not more than D, unless specially stated otherwise.

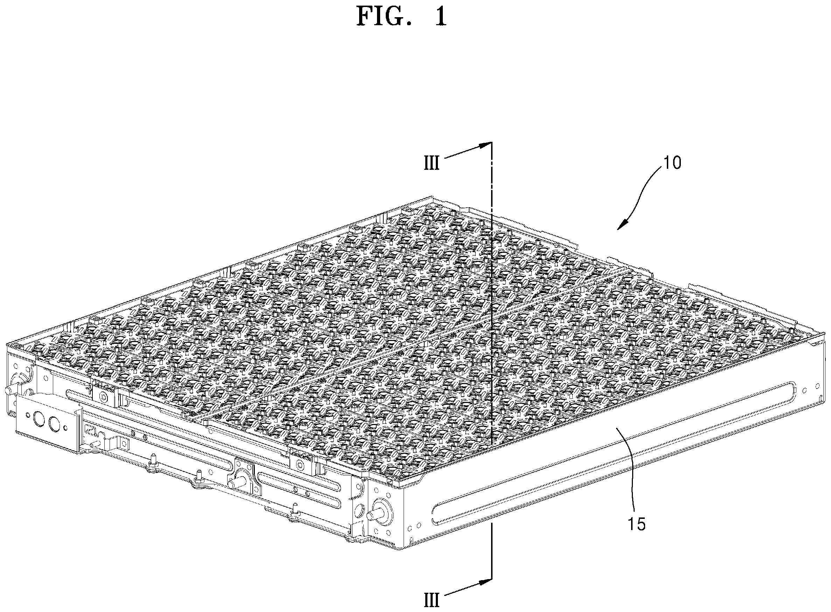

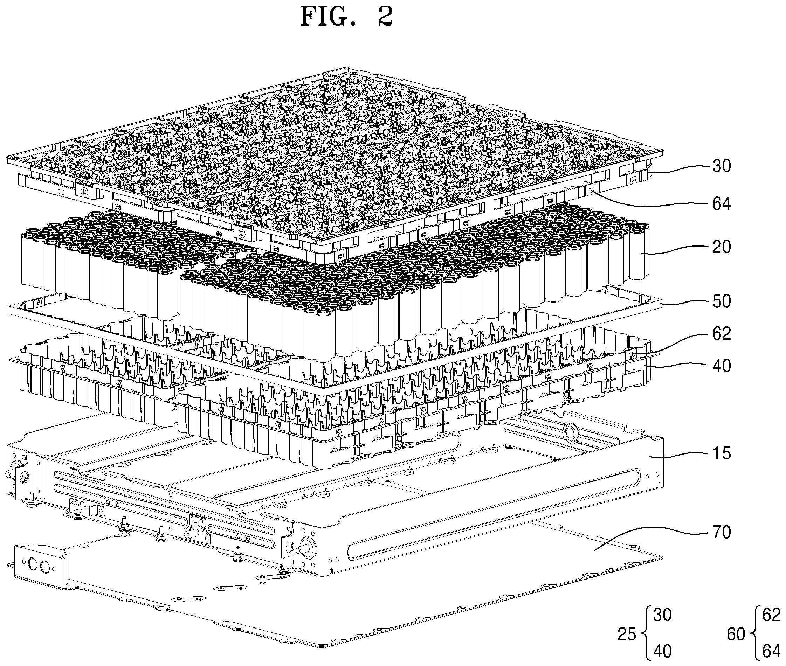

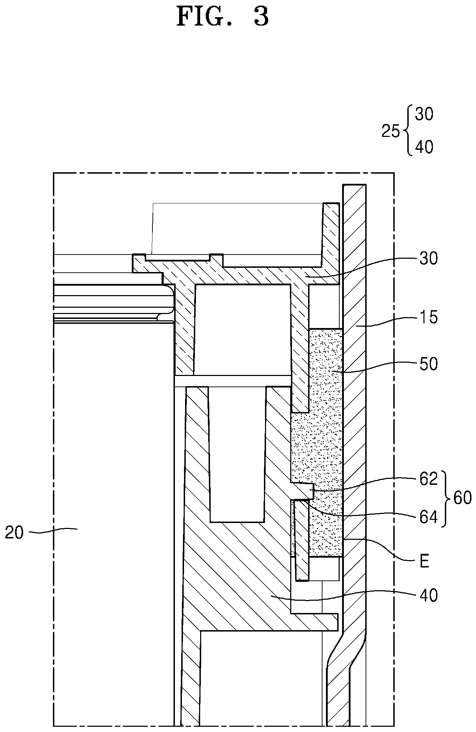

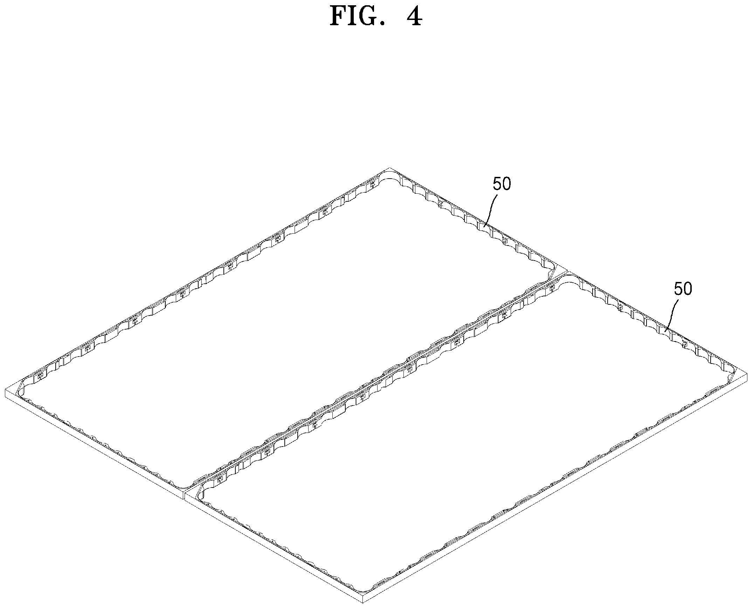

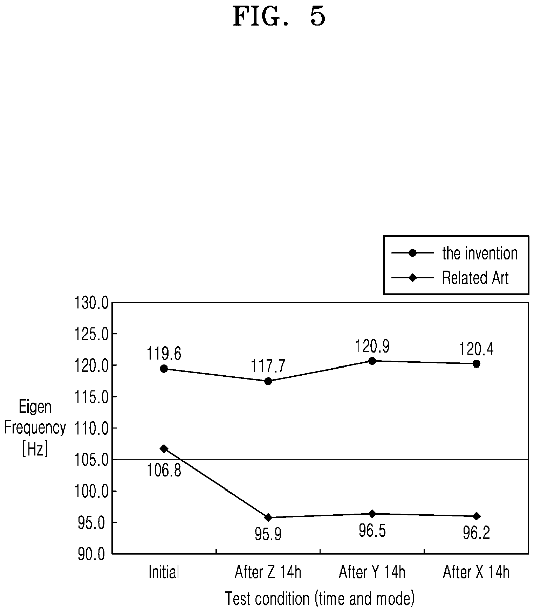

FIG. 1 shows an exterior of a battery module according to embodiments of the present disclosure. FIG. 2 shows main components of FIG. 1 separated from each other. FIG. 3 is a cross-sectional view along line III - III of FIG. 1. FIG. 4 shows a cubic shape of a curing structure according to the present disclosure; and FIG. 5 shows a test material that compares a structure rigidity (eigen frequency) of a battery module according to the present disclosure with a structure rigidity of a battery module according to a related art structure.

Referring to FIGS. 1 to 5, a battery module 10 according to an embodiment of the present disclosure may include a battery cell 20, a holder 25, a curing structure 50, and a frame 15.

The battery cell 20 may be provided in plural. The battery cells 20 may be cylindrical cells. The battery cells 20 may be arranged in an array form. For example, the battery cells 20 may be arranged in a hexagonal closed packed (HCP) structure, as viewed in a plan view. The battery cells 20 may be electrically connected by a bus bar.

The holder 25 may fix the battery cells 20 at a specific position. The holder 25 may include an upper holder 30 and a lower holder 40. The upper holder 30 may accommodate a top portion of the battery cells 20 to fix a position of the battery cells 20. The lower holder 40 may accommodate a lower portion of the battery cells 20 to fix the position of the battery cells 20. The upper holder 30 and the lower holder 40 may be manufactured with synthetic resin. The upper holder 30 and the lower holder 40 may be manufactured by injection molding. The lower holder 40 may be coupled to the upper holder 30. The upper holder 30 and the lower holder 40 may be coupled to each other by an adhesive.

The curing structure 50 may be a structure formed by curing the adhesive coupling the upper holder 30 and the lower holder 40 to each other. The curing structure 50 may couple the upper holder 30 to the lower holder 40. The curing structure 50 may be a structure formed by curing an adhesive in a liquid state. As the adhesive forming the curing structure 50, e.g., a silicon-containing adhesive or a urethane-containing adhesive, may be selectively implemented.

The frame 15 may be coupled to an outer side of the holder 25. For example, as illustrated in FIG. 3, the upper holder 30 and the lower holder 40 may vertically overlap each other, and the frame 15 may extend along external lateral sides of the upper holder 30 and the lower holder 40. For example, an empty space E may be defined between a portion of a side surface of the frame 15 and a portion of each of a side surface of the upper holder 30 and the lower holder 40 that face the side surface of the frame 15 along an entire perimeter of the holder 25, e.g., the empty space E may accommodate the adhesive for forming the curing structure 50. The frame 15 may be manufactured with metal. The frame 15 may protect the battery cell 20 having the position fixed by the holder 25 from an external shock.

The adhesive may be filled in the empty space E and may be cured with a boundary portion between the lower holder 40 and the upper holder 30 being in a submerged state, thereby forming the curing structure 50 (e.g., the adhesive may cover and overlap a lateral boundary portion between the lower holder 40 and the upper holder 30). The adhesive may be cured after being filled in the empty space E formed around the boundary portion between the upper holder 30 and the lower holder 40, e.g., so the curing structure 50 may extend along an entire circumference of the holder 25. For example, as illustrated in FIG. 4, the curing structure 50 may have a shape corresponding to a shape of the holder 25 (e.g., a rectangular loop). The adhesive may implement any one of various curing techniques, e.g., natural curing, thermal curing, ultraviolet curing, etc. The curing structure 50 formed by the adhesive may be coupled to the frame 15. The curing structure 50 may be obtained by filling the adhesive in a liquid state in the empty space E, thereby firmly coupling the upper holder 30 and the lower holder 40 to the frame 15. A torsional rigidity of the curing structure 50 may be further improved by forming a loop structure, e.g., having a loop shape.

The upper holder 30 and the lower holder 40 may include a hook coupling portion 60. As the adhesive is filled in the empty space of the hook coupling portion 60, the curing structure 50 may be formed. The hook coupling portion 60 may include a catching protrusion 62 and a catching ring 64.

The catching protrusion 62 may be a structure in the form of a hook formed on the lower holder 40. The catching protrusion 62 may be formed integrally with the lower holder 40.

The catching ring 64 may be formed on the upper holder 30. The catching ring 64 may be coupled to the catching protrusion 62, e.g., one catching protrusion 62 may be inserted through a corresponding catching ring 64 (FIG. 3). The hook coupling portion 60 may serve to maintain the upper holder 30 and the lower holder 40 in a provisionally assembled state before formation of the curing structure 50.

The lower holder 40 may include a spill prevention protrusion (not shown) that prevents the adhesive in the liquid state from spilling downwardly during the injection of the adhesive. In a process of injecting the adhesive in the liquid state to cause the boundary portion between the upper holder 30 and the lower holder 40 to submerge, the adhesive may be prevented from unintentionally flowing toward a bottom portion of the lower holder 40.

The curing structure 50 formed by curing of the adhesive may be formed along the circumference of the lower holder 40. The curing structure 50 may include a plurality of loop structures. For example, as illustrated in FIG. 4, each of the loop structures of the curing structure 50 may surround a grouping of the battery cells 20 within the battery module 10. For example, as illustrated in FIGS. 2-4, the curing structure 50 may laterally overlap and directly contact the frame 15 and portions of both the lower holder 40 and the upper holder 30 along an entire perimeter of the holder 25, such that the curing structure 50 may couple both the lower holder 40 and the upper holder 30 to each other and to the frame 15.

The frame 15 and the lower holder 40 may be coupled to each other by a screw. A cooling plate 70 may be installed under the lower holder 40.

Hereinafter, the working effects of the battery module 10 including the components as described above will be described in detail by using an example of a process of assembling the battery module 10.

First, a bottom portion of the battery cell 20 may be coupled to the lower holder 40. A pocket form (e.g., a pocket shape) accommodating the bottom portion of the battery cell 20 may be provided in plural in the lower holder 40.

The frame 15 may be assembled to the lower holder 40. The frame 15 and the lower holder 40 may be fixed at a plurality of positions by a screw. In this state, an adhesive in the liquid state may be injected along an upper edge circumference of the lower holder 40. The adhesive may be injected using separate equipment.

The upper holder 30 may be coupled to the lower holder 40 before the adhesive is cured. A pocket form accommodating the top portion of the battery cell 20 may be provided in plural in the upper holder 30. The upper holder 30 and the lower holder 40 may maintain the provisionally assembled state through the hook coupling portion 60.

The injected adhesive may then be cured. The adhesive may be filled in the empty space E between the upper holder 30 and the lower holder 40. The adhesive may be filled also in an empty space of the hook coupling portion 60. The adhesive may be filled also in a space between the holder 25 and the frame 15. For example, referring to FIG. 3, the adhesive may be filled in an empty space between the frame 15 and each of the lower and upper holders 40 and 30, and in an empty space between the catching ring 64 and the catching protrusion 62. As the adhesive is firmly cured, the curing structure 50 may be formed.

The curing structure 50 may have its own structural rigidity. The curing structure 50 may directly contact and firmly maintain an adhesive force with the frame 15 as well as the upper holder 30 and the lower holder 40. As a result, the structural rigidity of the boundary portion between the upper holder 30 and the lower holder 40 may be significantly improved, e.g., compared to a structure without the curing structure 50.

Referring to FIG. 5, a related art structure (i.e., a structure in which an upper holder and a lower holder are coupled to each other by a bolt and a nut, without a curing structure) was compared to a battery module according to embodiments of the present disclosure (i.e., a structure in which the upper holder 30 and the lower holder 40 are coupled to each other by the curing structure 50) in terms of the eigen frequency of the battery module. FIG. 5 shows a test result after the battery module 10 in an assembled state measures an eigen frequency in a specific direction. In FIG. 5, the horizontal axis indicates time and a frequency measurement mode, and the vertical axis indicates an eigen frequency.

Referring to FIG. 5, the battery module of the related art structure has an eigen frequency that decreases after 14 hours, relative to the eigen frequency at the initial time. On the other hand, the battery module 10 according to the present disclosure maintains the eigen frequency constant after 14 hours, relative to the eigen frequency at the initial time. That is, the battery module 10 according to the present disclosure exhibits an improved structural rigidity of the curing structure 50, thereby improving durability. Moreover, the battery module 10 according to the present disclosure does not need a bolt and an insert nut (e.g., compared to the related art structure), thereby reducing a manufacturing cost.

As described above, in the battery module according to the present disclosure, the upper holder and the lower holder for fixing the position of the battery cell are firmly coupled to each other by the curing structure formed by curing of the adhesive, thereby improving structural rigidity. Further, an insert-injection structure, such as, e.g., nut and bolt, for coupling the upper holder to the lower holder is not required, thereby reducing a manufacturing cost.

However, effects that may be obtained through the present disclosure are not limited to the above-described effects, and other technical effects not mentioned may be clearly understood by those of ordinary skill in the art from the description of the present disclosure described below.

By way of summation and review, an upper holder and a lower holder of a battery holder may be coupled to each other by a bolt. In this case, a nut may be inserted into the lower holder, e.g., the nut may be coupled to the lower holder by insert-injection or by indentation after injection. However, a structure in which the nut is installed by insert-injection or indentation after injection may require a high manufacturing cost. Also, if the upper holder and the lower holder are coupled to each other by laser welding, a weldable resin needs to be used, thereby increasing a material cost.

In contrast, one or more embodiments include a battery module with an improved coupling structure of an upper holder and a lower holder of the battery module, thereby reducing a manufacturing cost and enhancing a coupling rigidity. That is, in the battery module according to the present disclosure, the upper holder and the lower holder for fixing the position of the battery cell are firmly coupled to each other by the curing structure formed by curing of the adhesive, thereby improving structural rigidity, and an insert-injection structure is not required for coupling between the upper holder and the lower holder, thereby reducing a manufacturing cost.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery module (10), comprising:
a holder (25) configured to fix positions of a plurality of battery cells (20) therein, the holder (25) including an upper holder (30) accommodating and fixing top portions of the battery cells (20), and a lower holder (40) accommodating and fixing bottom portions of the battery cells (20);
a frame (15) coupled to an outer side of the holder (25), the frame (15) being configured to protect the battery cells (20); and
a curing structure (50) coupling the upper holder (30) and the lower holder (40) to each other, the curing structure (50) including a cured adhesive.

2. The battery module (10) as claimed in claim 1, wherein the cured adhesive laterally overlaps a boundary portion between the lower holder (40) and the upper holder (30).

3. The battery module (10) as claimed in claim 1 or 2, wherein the cured adhesive is coupled to the frame (15).

4. The battery module (10) as claimed in one of the preceding claims, wherein the holder (25) includes a hook coupling portion (60), the cured adhesive being provided in an empty space of the hook coupling portion (60).

5. The battery module (10) as claimed in claim 4, wherein the hook coupling portion (60) includes:
a catching protrusion (62) on the lower holder (40); and
a catching ring (64) on the upper holder (30) and coupled to the catching protrusion (62).

6. The battery module (10) as claimed in one of the preceding claims, wherein the cured adhesive includes any one of a silicon-containing adhesive and a urethane-containing adhesive.

7. The battery module (10) as claimed in one of the preceding claims, wherein the frame (15) and the lower holder (40) are coupled to each other by a screw.

8. The battery module (10) as claimed in one of the preceding claims, wherein the lower holder (40) includes a spill prevention protrusion for preventing an adhesive in a liquid state from spilling down when the adhesive is injected.

9. The battery module (10) as claimed in one of the preceding claims, wherein the curing structure (50) has a loop shape.

10. The battery module (10) as claimed in one of the preceding claims, wherein the curing structure (50) extends along a circumference of the lower holder (40).

11. A method of manufacturing a battery module (10), the method comprising:
providing a holder (25) configured to fix positions of a plurality of battery cells (20) therein, the holder (25) including an upper holder (30) for accommodating and fixing top portions of the battery cells (20), and a lower holder (40) for accommodating and fixing bottom portions of the battery cells (20);
providing a frame (15) coupled to an outer side of the holder (25), the frame (15) being configured to protect the battery cells (20);
depositing an adhesive between the holder (25) and the frame (15); and
curing the adhesive to form a curing structure (50) coupling the upper holder (30) and the lower holder (40) to each other.

12. The method as claimed in claim 11, further comprising:
coupling a bottom portion of a plurality of battery cells (20) to the lower holder (40);
assembling the frame (15) to the lower holder (40);
injecting an adhesive in the liquid state along an upper edge circumference of the lower holder (40);
coupling the upper holder (30) to the lower holder (40); and
curing the adhesive.

13. The method as claimed in claim 12, wherein the frame (15) is fixed to the lower holder (40) by a screw.

14. The method as claimed in one of claims 11 to 13, wherein curing the adhesive includes any one of natural curing, thermal curing, and ultraviolet curing to form the curing structure (50).

15. The method as claimed in claim one of claims 11 to 14, wherein the adhesive is cured with a boundary portion between the lower holder (40) and the upper holder (30) being in a submerged state.
